# EUROPÄISCHE PATENTANMELDUNG

(11) **EP 0 566 888 A1**
(43) Veröffentlichungstag der Anmeldung: **27.10.1993**
(21) Anmeldenummer: 93104846.6
(22) Anmeldetag: 24.03.1993
(51) Int. Cl.: G01F 25/00

(54) **Einrichtung zur Überprüfung der Funktion eines Grenz-Füllstandssensors**

(30) Priorität: 21.04.1992 DE 4213128
(71) Anmelder: GESTRA AG, D-28215 Bremen (DE)
(72) Erfinder: Föller, Werner, W-2805 Stuhr 1 (DE); Klann, Holm, W-2800 Bremen 33 (DE)
(74) Vertreter: Eisenführ, Speiser & Partner

(57) **Zusammenfassung**

2.1 Zur Überprüfung der Funktionsfähigkeit wird bei derartigen Einrichtungen vorübergehend der Flüssigkeitsspiegel in dem den Niveausensor enthaltenden Gehäuse geändert. Bei bekannten Einrichtungen geschieht dies durch Einblasen von Stickstoff oder Herausleiten von Flüssigkeit nach außen. Beide Fälle erfordern spezielle Leitungen. Bei der neuen Einrichtung soll ein Einblasen von Stickstoff oder ein Herausleiten von Flüssigkeit vermieden sein.

2.2 Die vorübergehende Senkung/Anhebung des Flüssigkeitsspiegels (2) im Gehäuse (4) erfolgt, indem Flüssigkeit aus dem Innenraum (8) des Gehäuses (4) mit einer Pumpe (13; 21) über einen Kanal (12; 10, 24) in den Innenraum (7) des umgebenden Behälters (1) oder umgekehrt gefördert wird.

2.3 Die Einrichtung ist für alle Einsatzfälle geeignet, die eine Überprüfung der Funktionsfähigkeit erfordern.

## Beschreibung

Die Erfindung betrifft eine Einrichtung der im Oberbegriff des Hauptanspruches spezifizierten Art zur Überwachung des Flüssigkeitsstandes in einem Behälter.

Derartige Einrichtungen bieten außer der üblichen Überwachung des Flüssigkeitsstandes im Behälter die Möglichkeit, ihre eigene Funktionsfähigkeit zu überprüfen. Eine solche Überprüfung ist z. B. bei Dampfkesseln für einen "Betrieb ohne ständige Beaufsichtigung" notwendig.

Bekannt ist es, zur Überprüfung in dem den Niveausensor enthaltenden Gehäuse vorübergehend den Flüssigkeitsstand abzusenken, nicht jedoch im umgebenden Behälter. Sobald der Flüssigkeitsspiegel im Gehäuse die Sollhöhe unterschreitet, gibt der Niveausensor ein entsprechendes Niveausignal. Im Fall einer Störung - z. B. bei verschlossener Durchtrittsöffnung oder defektem Niveausensor - unterbleibt das Niveausignal. Die Niveausignale während des Prüfzyklus oder ihr Ausbleiben geben Aufschluß über die Funktionsfähigkeit der Einrichtung.

Bei einer bekannten Ausführung (DE-PS 30 13 019) wird zur Prüfung ein gasförmiges Medium - vorzugsweise Stickstoff - mit einem höheren Druck als dem im Behälter herrschenden in das Gehäuse eingeleitet. Dadurch wird die im Gehäuse befindliche Flüssigkeit durch die unterhalb der Füllstand-Sollhöhe befindliche Durchtrittsöffnung aus dem Gehäuse in den Behälter verdrängt. Durch die oberhalb der Flüssigkeit vorhandene Druckausgleichsöffnung gelangen relativ große Mengen Stickstoff aus dem Gehäuse in den Behälter und dort in den Dampf. Dies kann zu Beeinträchtigungen führen, wie z. B. Verschlechterung des Wärmeüberganges und damit zu Störungen in der angeschlossenen Anlage. Außerdem ist diese Lösung kostenintensiv durch die Bereithaltung des Stickstoffes, die notwendige Zuleitung zwischen dem Gehäuse und dem Stickstoffreservoir, die zugehörigen Ventile sowie deren Betätigungseinrichtungen.

Bei einer anderen bekannten Ausführung (EP-OS 441 999) erfolgt eine Absenkung des Füllstandes im Gehäuse dadurch, daß das Gehäuse vorübergehend mit einem außerhalb des Behälters befindlichen Raum niedrigeren Druckes verbunden wird. Aufgrund der Druckdifferenz fließt Flüssigkeit aus dem Gehäuse in jenen externen Raum und der Flüssigkeitsstand im Gehäuse sinkt. Auch in diesem Fall sind Ventile und Leitungen erforderlich, um das Gehäuse mit einem geeigneten, außerhalb des Behälters befindlichen Aufnahmeraum für die abfließende Flüssigkeit zu verbinden. Ist die Flüssigkeit heiß, dann wird dem Behälter überdies auch Energie entzogen.

Der Erfindung liegt nun die Aufgabe zugrunde, eine Einrichtung der eingangs genannten Art zu schaffen, bei der eine Einleitung eines gasförmigen Mediums und auch ein Abfließen von Flüssigkeit vermieden ist.

Diese Aufgabe wird durch die im Anspruch 1 angegebenen Merkmale gelöst.

Während der üblichen Überwachung des Flüssigkeitsstandes im Behälter ist die Pumpe außer Betrieb. Im Gehäuse kann sich - freie Durchtrittsöffnung und freie Druckausgleichsöffnung vorausgesetzt - der gleiche Flüssigkeitsstand wie im Behälter einstellen. Eine exakte Überwachung des Flüssigkeitsstandes ist somit möglich.

Für eine Überprüfung der Einrichtung wird die Pumpe in Betrieb gesetzt. Dadurch wird Flüssigkeit durch den Kanal gepumpt und auf diese Weise vorübergehend der Flüssigkeitsstand im Gehäuse geändert. Sobald die Sollhöhe unterschritten bzw. überschritten wird, tritt ein entsprechendes Niveausignal des Niveausensors auf. Daraufhin oder spätestens nach einer vorgegebenen Prüfdauer wird die Pumpe wieder ausgeschaltet. Im Gehäuse kann sich umgehend wieder der gleiche Flüssigkeitsstand wie im Behälter einstellen. Die Niveausignale während des Prüfzyklus oder ihr Ausbleiben geben Aufschluß über die Funktionsfähigkeit der Einrichtung.

Bei dieser Überprüfung wird weder ein gasförmiges Medium dem Gehäuse bzw. dem Behälter zugeführt noch wird aus ihnen Flüssigkeit nach außen abgeleitet. Dementsprechend entfallen auch Verbindungsleitungen zu zugehörigen Reservoiren oder Aufnahmeräumen.

Die Unteransprüche haben besonders vorteilhafte Weiterbildungen der Erfindung zum Gegenstand.

Bei dem in einem Behälter zu überwachenden Flüssigkeitsstand kann es sich um einen Niedrig-Flüssigkeitsstand oder einen Hoch-Flüssigkeitsstand handeln. Im ersten Fall soll der Niveausensor ein Signal geben, sobald der Flüssigkeitsstand das Niedrigniveau unterschreitet. Im anderen Fall ist vom Niveausensor zu melden, wenn der Flüssigkeitsstand das Hochniveau erreicht. Der Anspruch 2 betrifft die Überprüfung eines Niveausensors für Niedrig-Flüssigkeitsstand, während der Anspruch 3 auf die Überprüfung eines Niveausensors für Hoch-Flüssigkeitsstand gerichtet ist.

Der Anspruch 4 bietet die Möglichkeit eines sehr kurzen Kanals. Außerdem befindet sich der Antriebsmotor außerhalb des Behälters, so daß er nicht den Betriebsbedingungen im Innenraum des Behälters ausgesetzt ist. Dies ist insbesondere bei hohen Betriebstemperaturen und -drücken, wie sie z. B. in Dampfkesseln auftreten, von Vorteil.

Durch den Anspruch 5 sind der Kanal, die Pumpe und ihr Antriebsmotor sämtlich an bzw. in dem Gehäuse angeordnet. Die konstruktiven und baulichen Merkmale beschränken sich also auf das Gehäuse. An dem Behälter selbst müssen keine speziellen Maßnahmen getroffen werden. Die Merkmale des Anspruches 6 erleichtern den Ein- und Ausbau, indem die lösbare Außenwand des Gehäuses, der Antriebsmotor, die Antriebswelle und die Pumpe eine herausziehbare Einheit bilden.

Durch die Gestaltung des Kanals entsprechend Anspruch 7 wird eine besonders intensive Entleerung des Gehäuse-Innenraumes bis in den Seitenwandbereich begünstigt. Dies gilt insbesondere auch dann, wenn entsprechend Anspruch 8 auf ein eigenes Pumpengehäuse verzichtet und als Pumpe ein Förderrad unmittelbar im Kanal angeordnet wird. Hiermit und auch durch die Merkmale des Anspruches 9 wird eine besonders kostengünstige Lösung erzielt. Wenn die Durchtrittsöffnung und der Kanal eins sind, dann kann während des Betriebes der Pumpe keine Flüssigkeit aus dem Behälter in das Gehäuse nachfließen. Die erforderliche Pumpenleistung ist dementsprechend gering.

Die Weiterbildung gemäß Anspruch 10 bietet neben einer besonders intensiven Entleerung des Gehäuse-Innenraumes die Möglichkeit eines einfachen Ausbaues der Pumpe, z. B. für Wartungen oder Reparaturen. Die Pumpe und die zwischen ihr und dem Gehäuse-Innenraum befindliche Trennwand können nach Entfernen der lösbaren Außenwand des Gehäuses nach außen herausgezogen werden. Die Lagesicherung der Trennwand in ihrer Einbaulage dient dazu, ein Aufsteigen der Trennwand zu verhindern, wenn sich unter ihr durch die Pumpe ein Staudruck ausbilden sollte. Eine Lagesicherung kann beispielsweise durch ein entsprechendes Gewicht der Trennwand erfolgen. Eine andere bevorzugte Art der Lagesicherung durch die lösbare Außenwand des Gehäuses hat der Anspruch 11 zum Gegenstand.

Einen anderen, vorteilhaften Weg, den Zugang zu der Pumpe sicherzustellen, bietet der Anspruch 12. Das komplette Gehäuse kann in einfacher Weise mitsamt Niveausensor und Pumpe aus dem Behälter herausgezogen werden. Eine besondere wartungs- und reparaturfreundliche Ausführung ist erzielt.

Eine besonders kompakte Ausführung des Gehäuses unter Verwendung eines handelsüblichen Halbzeuges, sprich: einem Rohr, gibt der Anspruch 13 an. Außer dem Niveausensor sind auch die Antriebswelle und die Pumpe in dem Rohr untergebracht.

Insbesondere für jene Fälle, in denen die den Antriebsmotor tragende lösbare Außenwand des Gehäuses und die Pumpe getrennt voneinander ein- oder ausgebaut werden, erweisen sich die Merkmale des Anspruches 14 als vorteilhaft. Es sind diverse Ausführungen der Kupplung verwendbar, z. B. mechanische Steckkupplungen, magnetische Kupplungen usw.

Der Anspruch 15 bietet den Vorteil, daß die Pumpe mitsamt ihrem Antriebsmotor unmittelbar im Behälter in der Nähe des Gehäuses angeordnet werden kann. Der Kanal kann somit sehr kurz ausgeführt werden und eine Antriebswelle entfällt.

Eine bauliche Vereinfachung wird durch den Anspruch 16 erzielt, indem die Durchtrittsöffnung des Gehäuses zugleich den Kanal für die Pumpe bildet. Ein eigener Kanal für die Pumpe erübrigt sich somit.

Bei der Ausführung nach Anspruch 17 befinden sich die Pumpe und ihr Antrieb beide außerhalb von Gehäuse und Behälter.

Hierbei ist eine besonders große Variationsbreite für die Pumpe und ihren Antrieb gegeben, so daß problemlos auf handelsübliche Ausführungen zurückgegriffen werden kann. Eine besonders montagegünstige Weiterbildung gibt der Anspruch 18 an.

Durch den Anspruch 19 wird die Ausführung der Einrichtung noch montagefreundlicher, da die Pumpe und der Niveausensor gemeinsam mit der lösbaren Außenwand des Gehäuses eine Montageeinheit bilden.

In der Zeichnung sind sieben Ausführungsbeispiele der erfindungsgemäßen Einrichtung dargestellt. Es zeigt:
Fig. 1 einen Ausschnitt eines Behälters mit einer Einrichtung zur Überwachung eines Niedrig-Flüssigkeitsstandes im Schnitt, bei der Pumpe und Antriebsmotor beide im Behälter angeordnet sind,
Fig. 2 einen Ausschnitt eines Behälters mit einer Einrichtung zur Überwachung eines Niedrig-Flüssigkeitsstandes im Schnitt, bei der Pumpe und Antriebsmotor beide außerhalb des Behälters angeordnet sind,
Fig. 3 die Ausführung nach Fig. 2 in Seitenansicht,
Fig. 4 einen Ausschnitt eines Behälters mit einer ersten Ausführung der Einrichtung zur Überwachung eines Niedrig-Flüssigkeitsstandes im Schnitt, bei der die Pumpe innenliegend und der Antriebsmotor außenliegend angeordnet ist,
Fig. 5 einen Ausschnitt eines Behälters mit einer zweiten Ausführung der Einrichtung zur Überwachung eines Niedrig-Flüssigkeitsstandes im Schnitt, bei der die Pumpe innenliegend und der Antriebsmotor außenliegend angeordnet ist,
Fig. 6 einen Ausschnitt eines Behälters mit einer dritten Ausführung der Einrichtung zur Überwachung eines Niedrig-Flüssigkeitsstandes im Schnitt, bei der die Pumpe innenliegend und der Antriebsmotor außenliegend angeordnet ist,
Fig. 7 einen Ausschnitt eines Behälters mit einer vierten Ausführung der Einrichtung zur Überwachung eines Niedrig-Flüssigkeitsstandes im Schnitt, bei der die Pumpe innenliegend und der Antriebsmotor außenliegend angeordnet ist, und
Fig. 8 einen Ausschnitt eines Behälters mit einer Einrichtung zur Überwachung eines Hoch-Flüssigkeitsstandes im Schnitt, bei der Pumpe und Antriebsmotor beide im Behälter angeordnet sind.

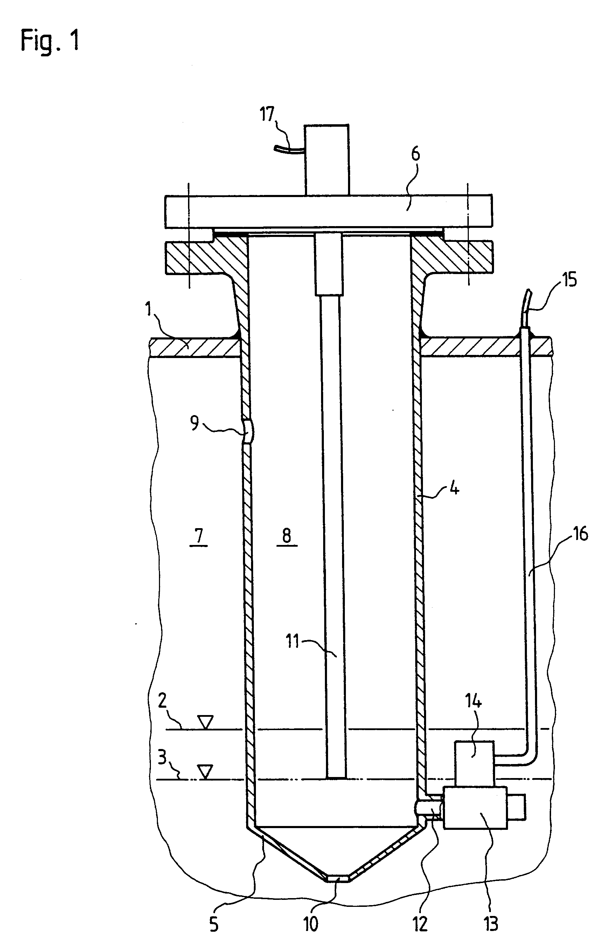

In Fig. 1 ist ein Behälter 1, in der Regel ein Dampfkessel oder ein Heißwasserkessel, bis zu einem Flüssigkeitsstand 2 mit Flüssigkeit gefüllt. Der Behälter 1 ist mit einer Einrichtung zur Überwachung des Flüssigkeitsstandes 2 ausgerüstet, deren Aufgabe darin besteht, ein eventuelles Absinken des Flüssigkeitsstandes 2 unter ein Niedrigniveau 3 zu signalisieren.

Zu diesem Zweck ist im Behälter 1 ein Gehäuse 4 angeordnet, das aus einem senkrechten Rohr besteht. Dessen unteres Ende ist unterhalb des Niedrigniveaus 3 durch eine quer angeordnete Trennwand 5 verschlossen. Mit seinem oberen Ende ragt das Gehäuse 4 aus dem Behälter 1 heraus. Dort weist es eine als lösbaren Deckel ausgebildete Außenwand 6 auf. Im Behälter 1 ist das Gehäuse 4 oberhalb des höchsten zu erwartenden Flüssigkeitsstandes seitlich mit einer die Innenräume 7, 8 des Behälters 1 und des Gehäuses 4 miteinander verbindenden Druckausgleichsöffnung 9 versehen. Unterhalb des Niedrigniveaus 3 weist das Gehäuse 4 in der Trennwand 5 zentral eine Durchtrittsöffnung 10 für die im umgebenden Behälter 1 befindliche Flüssigkeit auf. Von oben erstreckt sich ein Niveausensor 11, beispielsweise eine Elektrode, im Gehäuse 4 bis zu dem Niedrigniveau 3 hinab.

Das Gehäuse 4 weist unterhalb des Niedrigniveaus 3 seitlich einen den Innenraum 8 des Gehäuses 4 und den Innenraum 7 des Behälters 1 miteinander verbindenden Kanal 12 auf, der mit einer im Behälter 1 angeordneten Pumpe 13 versehen ist. Die Pumpe 13 und ihr Antriebsmotor 14 bilden eine gekapselte, tauchbare Einheit, die sich unmittelbar in der Flüssigkeit des Behälters 1 befindet. Vom Antriebsmotor 14 ist eine elektrische Anschlußleitung 15 in einem medium- und druckdichten Schutzrohr 16 aus dem Behälter 1 herausgeführt.

Während der Überwachungsfunktion der Einrichtung - also während der Aufgabe: Flüssigkeitsstand 2 im Behälter 1 überwachen - befindet sich die Pumpe 13 im Stillstand. Wenn die Druckausgleichsöffnung 9 und die Durchtrittsöffnung 10 beide in ordnungsgemäßem Zustand, d. h. offen sind, stellt sich im Gehäuse 4 der gleiche Flüssigkeitsstand 2 ein wie im Behälter 1. Durch den Niveausensor 11 im Gehäuse 4 wird somit signalisiert, ob der Flüssigkeitsstand 2 im Behälter 1 sich oberhalb oder unterhalb des Niedrigniveaus 3 befindet. Die gewonnenen Signale werden über eine Signalleitung 17 an geeignete Überwachungs-, Steuerungs- oder Auswerteeinrichtungen (nicht dargestellt) gegeben. Dort können sie - wie üblich - in Meldungen (z. B. Wassermangel) und/oder in Maßnahmen (z. B. Flüssigkeit zuführen, Brenner abschalten) umgesetzt werden.

Zur Überprüfung der Funktionsfähigkeit der Einrichtung wird die Pumpe 13 in Betrieb gesetzt, indem ihr Antriebsmotor 14 über die Anschlußleitung 15 mit Strom gespeist wird. Die Förderrichtung und Leistung der Pumpe 13 sind so, daß sie über den Kanal 12 mehr Flüssigkeit aus dem Gehäuse 4 in den Behälter 1 abpumpt als durch die Durchtrittsöffnung 10 wieder in das Gehäuse 4 einströmt. Infolgedessen sinkt nach dem Einschalten der Pumpe 13 im Gehäuse 4 der Flüssigkeitsstand. Sobald er das Niedrigniveau 3 unterschreitet, erzeugt der Niveausensor 11 ein entsprechendes Signal. Die Funktionsfähigkeit des Niveausensors 11 ist dadurch erwiesen.

Bei Auftreten des Signals des Niveausensors 11 oder aber spätestens nach einer festgelegten Prüfdauer wird die Pumpe 13 wieder ausgeschaltet. Im Gehäuse 4 stellt sich, z. B. via Durchtrittsöffnung 10, umgehend wieder der gleiche Flüssigkeitsstand 2 wie im Behälter 1 ein, was vom Niveausensor 11 signalisiert wird. Dieses Signal macht u. a. deutlich, daß sowohl die Druckausgleichsöffnung 9 als auch die Durchtrittsöffnung 10 offen ist, dort also kein Defekt vorliegt.

Bleiben während des Betriebes der Pumpe 13 bzw. nach Ausschalten derselben die erwähnten Signale des Niveausensors 11 aus, ist die Funktion der Einrichtung gestört, z. B. defekter Niveausensor 11, verstopfte Durchtrittsöffnung 10.

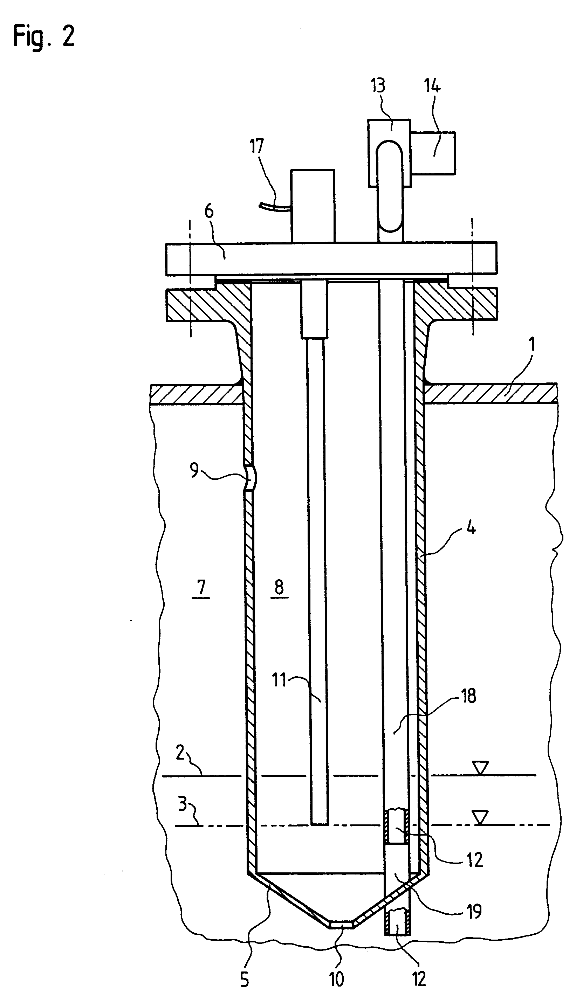

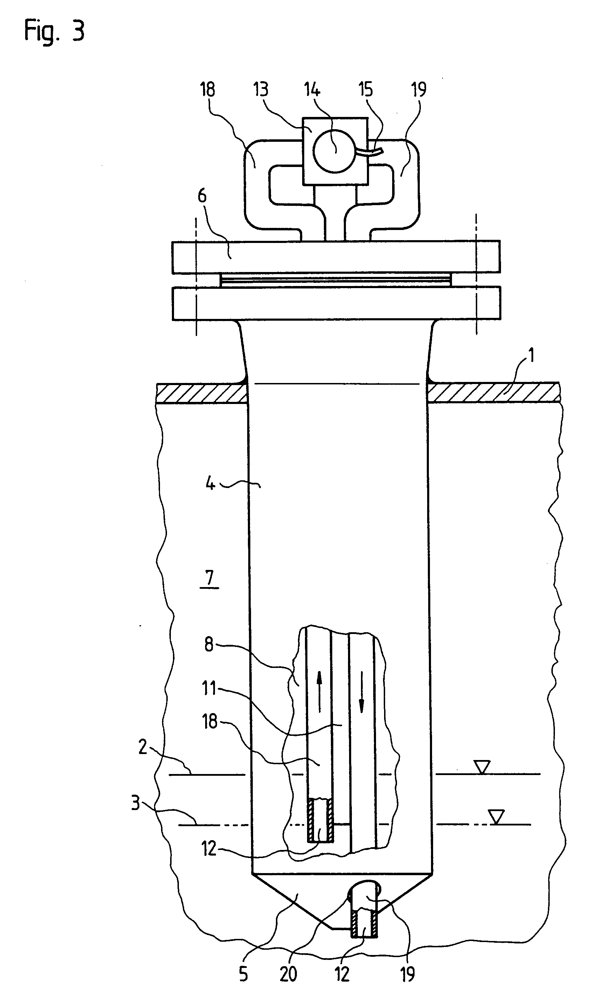

Bei dem Ausführungsbeispiel nach den Fig. 2 und 3 sind die Pumpe 13 und ihr Antriebsmotor 14 beide außenliegend angeordnet. Im Gehäuse 4 sind eine Abflußleitung 18 und eine Rückführleitung 19 angeordnet. Das untere, offene Ende der Abflußleitung 18 befindet sich unterhalb des Niedrigniveaus 3. Von dort führt die Abflußleitung 18 im Gehäuse 4 empor und durch die Wand 5 hindurch in den Eintritt der Pumpe 13. An dem Pumpenaustritt ist die Rückführleitung 19 angeschlossen. Sie führt von dort durch die Außenwand 6 hindurch im Gehäuse 4 hinab. Die Trennwand 5 des Gehäuses 4 weist an seinem unteren Ende eine Durchlaßöffnung 20 auf, durch die hindurch die Rückführleitung 19 in den Behälter 1 hineinragt.

Zur Überprüfung der Einrichtung nach den Fig. 2 und 3 wird die Pumpe 13 eingeschaltet. Daraufhin wird die Flüssigkeit von der Pumpe 13 über die Abflußleitung 18 aus dem Gehäuse 4 abgesaugt und über die Rückführleitung 19 in den das Gehäuse 4 umgebenden Behälter 1 gefördert. Dementsprechend sinkt der Flüssigkeitsstand im Gehäuse 4. Der weitere Prüfablauf entspricht dem zu Fig. 1 Beschriebenen.

Die lösbare Außenwand 6 bildet gemeinsam mit dem Niveausensor 11, der Abflußleitung 18, der Rückführleitung 19 und der Pumpe 13 eine Montageeinheit. Beim Einbau wird das untere Ende der Rückführleitung 19 durch die Durchlaßöffnung 20 hindurchgesteckt. Beim Ausbau braucht es lediglich herausgezogen zu werden.

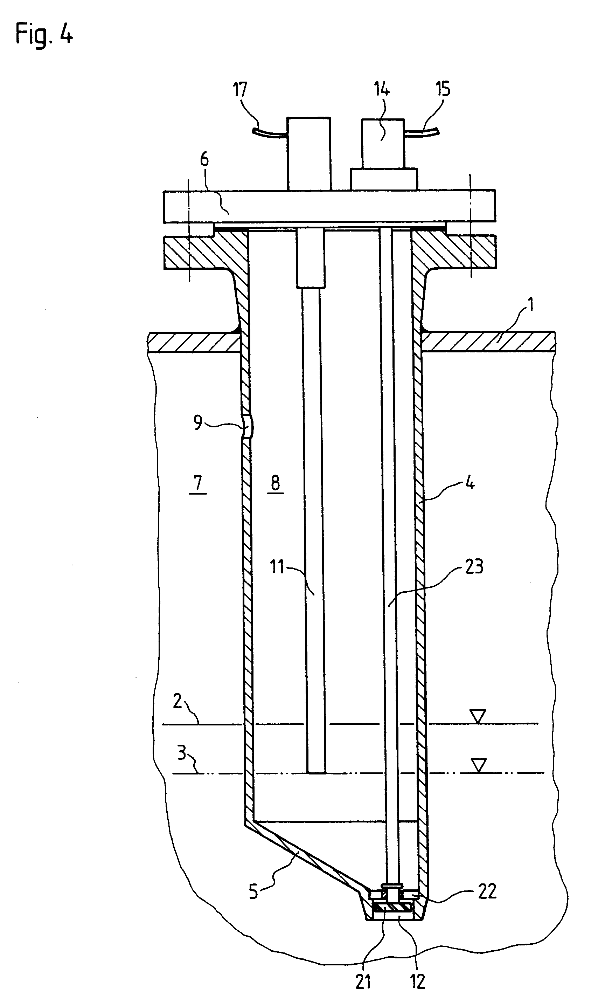

In der Ausführung nach Fig. 4 sind der Antriebsmotor 14 und die Pumpe räumlich voneinander getrennt angeordnet. Der Antriebsmotor 14 befindet sich am oberen Ende des Gehäuses 4, außen an der lösbaren Außenwand 6. Gegenüberliegend ist am unteren Ende des Gehäuses 4 in der Trennwand 5 die Durchtrittsöffnung vorgesehen; sie fungiert gleichzeitig als Kanal 12. Die Pumpe wird von einem Förderrad 21 (z. B. einem Flügelrad) gebildet, das im Kanal 12 angeordnet ist. Dort befindet sich auch ein Wellenlager 22 für eine Antriebswelle 23, die das Gehäuse 4 vom einen zum anderen Ende durchsetzt und das Förderrad 21 mit dem Antriebsmotor 14 verbindet.

Während der normalen Niveauüberwachung der Einrichtung nach Fig. 4 steht das Förderrad 21 still. Im Kanal 12 ist trotz des Förderrades 21 soviel freier Querschnitt vorhanden, daß sich im Gehäuse 4 der gleiche Flüssigkeitsstand 2 einstellt wie im Behälter 1. Durch den Niveausensor 11 kann somit eine zuverlässige Überwachung des Flüssigkeitsstandes 2 erfolgen. Bezüglich der gewonnenen Signale gilt das zu Fig. 1 Beschriebene.

Zur Überprüfung der Funktion der Einrichtung nach Fig. 4 wird der Antriebsmotor 14 eingeschaltet. Er versetzt über die Antriebswelle 23 das Förderrad 21 in Bewegung, so daß die im Gehäuse 4 befindliche Flüssigkeit durch den Kanal 12 in den Behälter 1 gepumpt wird. Der weitere Prüfablauf entspricht dem zu Fig. 1 Beschriebenen.

Da bei der Ausführung nach Fig. 4 der Kanal 12 zugleich die Durchtrittsöffnung zwischen den beiden Innenräumen 7, 8 bildet, fließt während des Abpumpens keine Flüssigkeit aus dem Behälter 1 in das Gehäuse 4 nach. Die erforderliche Leistung der Pumpe 13 ist deshalb besonders gering. Die Außenwand 6 bildet mit dem Niveausensor 11, dem Antriebsmotor 14, der Antriebswelle 23, dem Wellenlager 22 und dem Förderrad 21 eine Montageeinheit. Beim Einbau werden das Förderrad 21 und das Wellenlager 22 von oben in den Kanal 12 eingeschoben. Eine spezielle Befestigung ist dort nicht erforderlich. Somit kann die Montageeinheit beim Ausbau problemlos aus dem Gehäuse 4 herausgezogen werden. Bei Bedarf kann der Antriebsmotor 14 durch Einfügen eines Getriebes, einer biegsamen Welle oder dgl. zur Antriebswelle 23 seitlich versetzt oder auch im Winkel zu ihr angeordnet werden.

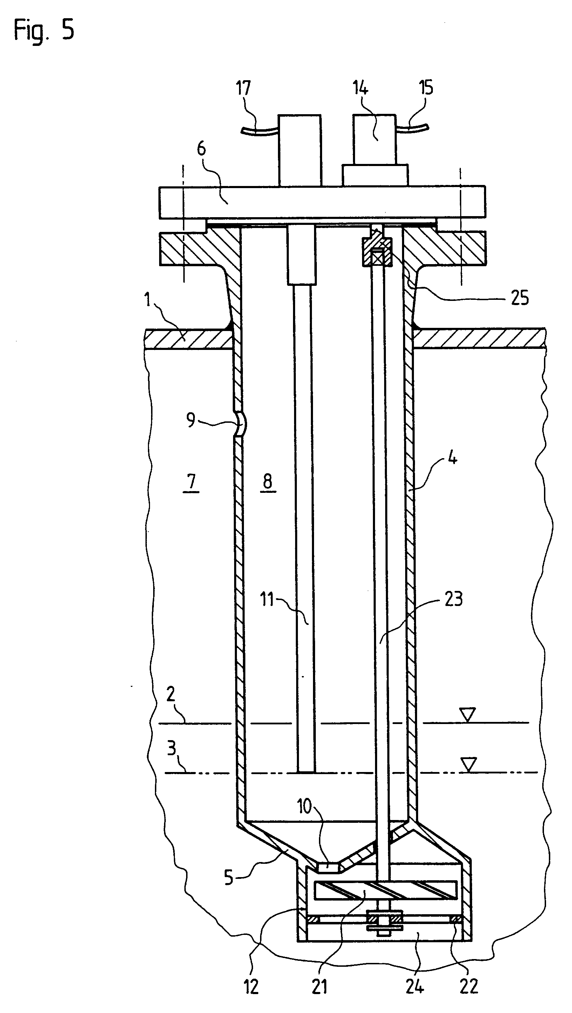

In der Ausführung nach Fig. 5 ist der Kanal 12 in zwei Abschnitte unterschiedlichen Querschnitts untergliedert. Die mit dem Innenraum 8 verbundene Durchtrittsöffnung 10 bildet den ersten, im Querschnitt kleineren Kanalabschnitt. Daran schließt sich der zweite Kanalabschnitt 24 mit größerem Querschnitt an. In dem zweiten Kanalabschnitt 24 sind das Förderrad 21 und das Wellenlager 22 angeordnet. Die Antriebswelle 23 durchdringt die Trennwand 5 zwischen dem Innenraum 8 und dem zweiten Kanalabschnitt 24. Sie ist an ihrem unteren Ende in dem Wellenlager 22 gelagert und mit dem Förderrad 21 verbunden. Am oberen Ende der Antriebswelle 23 ist eine in Axialrichtung lösbare Kupplung 25 zur Übertragung der Drehbewegung des Antriebsmotors 14 vorgesehen.

Die Kupplung 25 ermöglicht ein einfaches Entfernen der lösbaren Außenwand 6, z. B. für Wartungs- oder Reparaturaufgaben. Beim Ziehen in Axialrichtung der Antriebswelle 23 trennt die Kupplung 25 und beim Zusammenbau wird sie lediglich auf die Antriebswelle 23 aufgesteckt. Statt am oberen Ende der Antriebswelle 23 kann die Kupplung 25 im Bedarfsfall selbstverständlich auch an jeder anderen Stelle der Antriebswelle 23 angeordnet werden, z. B. nahe dem Förderrad 21.

Aufgrund des großen Querschnittes des zweiten Kanalabschnittes 24 kann ein Förderrad 21 von relativ großem Durchmesser Verwendung finden. Dadurch können besonders geringe Förderrad-Drehzahlen realisiert werden, was insbesondere in heißen Flüssigkeiten nahe der Siedetemperatur von großem Vorteil ist. Da die den ersten Kanalabschnitt bildende Durchtrittsöffnung 10 kleiner ist als der zweite Kanalabschnitt 24 und kleiner als das Förderrad 21, wird eine besonders intensive Entleerung des Innenraumes 8 auch im Seitenwandbereich des Gehäuses 4 erreicht. Ein sich eventuell am Umfang des Förderrades 21 bildender Rückstrom kann nicht in den Innenraum 8 gelangen. Im übrigen gilt bezüglich Funktion und Prüfablauf das zu Fig. 1 Beschriebene.

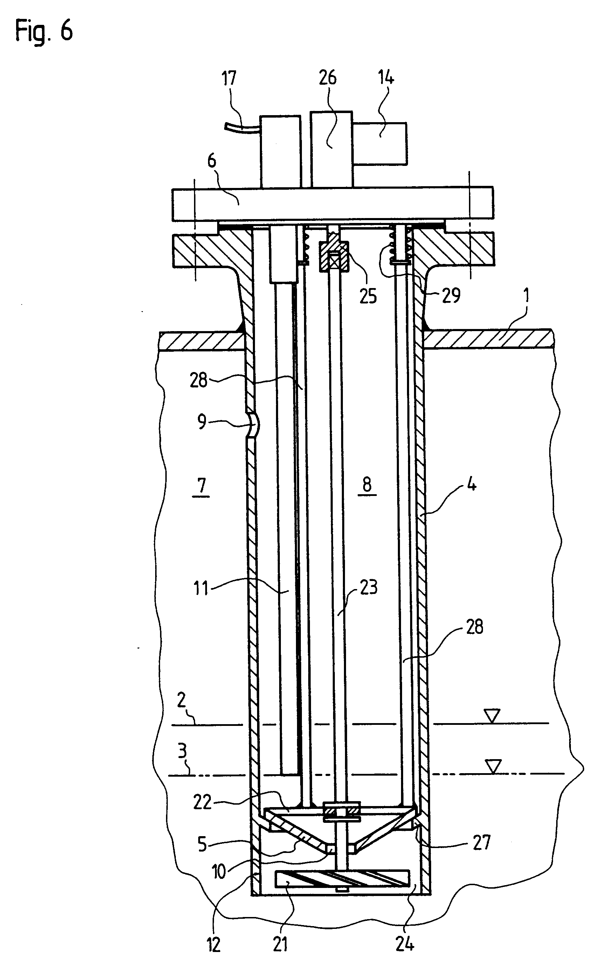

In der Einrichtung nach Fig. 6 treibt der Antriebsmotor 14 die sich durch das Gehäuse 4 erstreckende Antriebswelle 23 über ein Winkelgetriebe 26 an. Das rohrförmige Gehäuse 4 weist mit Abstand zu seinem unteren Ende eine innen umlaufende Schulter 27 auf. Darauf liegt die als separates Teil ausgebildete, mit der Durchtrittsöffnung 10 versehene Trennwand 5 mit ihrem Außenrandbereich auf. Mit der Trennwand 5 sind das Wellenlager 22 und symmetrisch verteilt drei Distanzstangen 28 verbunden. Letztere erstrecken sich nahe der Seitenwand des Gehäuses 4 zur lösbaren Außenwand 6 empor. Haltefedern 29 stützen sich an der Außenwand 6 ab und üben eine Längskraft auf die Distanzstangen 28 auf, so daß die Trennwand 5 in ihrer Einbaulage, d. h. auf der Schulter 27 gehalten wird. Der vom unteren Ende bis zur Trennwand 5 reichende Teil des Gehäuses 4 bildet den zweiten Kanalabschnitt 24. Darin befindet sich das mit der durch die Durchtrittsöffnung 10 hindurchragenden Antriebswelle 23 verbundene Förderrad 21, dessen Außendurchmesser kleiner ist als die lichte Weite der Schulter 27.

Die Trennwand 5, das Wellenlager 22, das Förderrad 21, die Distanzstangen 28 und die Haltefedern 29 bilden eine erste Baueinheit. Die Außenwand 6, der Niveausensor 11, der Antriebsmotor 14, das Winkelgetriebe 26 und die Kupplung 25 bilden eine zweite Baueinheit. Beim Zusammenbau der Einrichtung nach Fig. 6 wird zunächst die erste Baueinheit von oben in das Gehäuse 4 eingesetzt, bis die Trennwand 5 auf der Schulter 27 zur Auflage kommt. Anschließend wird die zweite Baueinheit aufgesetzt und dabei die Kupplung 25 auf die Antriebswelle 23 gesteckt. Der Ein- und Ausbau der kompletten Baueinheiten ist somit schnell und einfach möglich. Die Montage, Wartung oder Reparatur der Baueinheiten erfolgt außerhalb des Gehäuses 4. Funktion und Prüfablauf der Einrichtung nach Fig. 6 entsprechen dem zu Fig. 1 und 5 Beschriebenen.

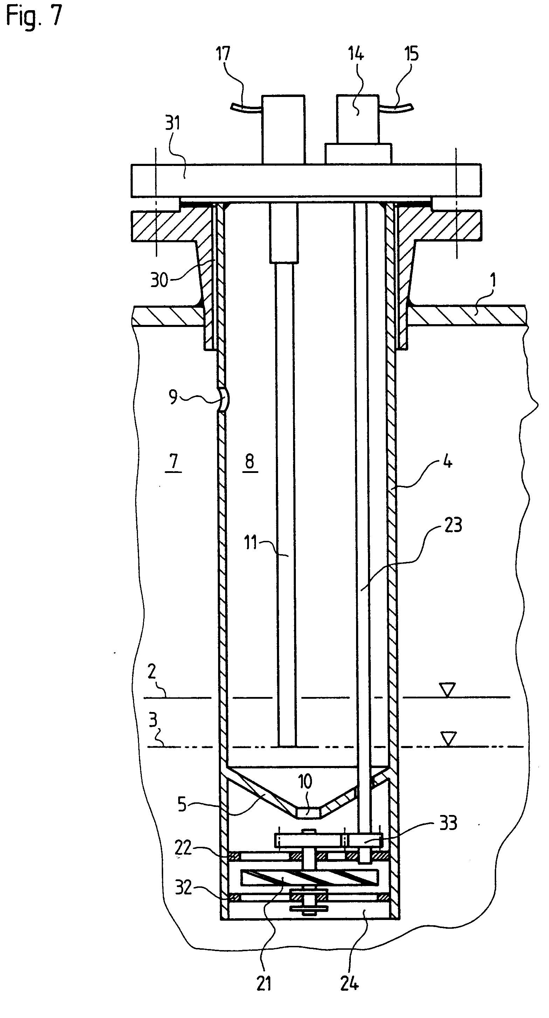

In Fig. 7 weist der Behälter 1 eine Aufnahmeöffnung 30 auf, die durch einen abnehmbaren Deckel 31 verschlossen ist. Das Gehäuse 4 ist als zylindrisches Rohr ausgebildet. Dessen Außendurchmesser ist kleiner als der Durchmesser der Aufnahmeöffnung 30, und es ragt von außen durch die Aufnahmeöffnung 30 in den Innenraum 7 des Behälters 1 hinein. Das obere Rohrende des Gehäuses 4 ist an dem Deckel 31 befestigt und wird durch ihn nach außen verschlossen. Die Trennwand 5 ist im Gehäuse 4 mit Abstand zu dessen unterem Rohrende quer angeordnet. Der unterhalb der die Durchtrittsöffnung 10 aufweisenden Trennwand 5 gelegene Teil des Gehäuses 4 bildet den zweiten Kanalabschnitt 24, in dem sich das zentrisch angeordnete Förderrad 21 zwischen zwei Wellenlagern 22, 32 befindet. Die Antriebswelle 23 hat eine seitlich versetzte Einbaulage. Dabei durchdringt sie die Trennwand 5 und ist über ein Getriebe 33 mit dem Förderrad 21 verbunden.

Der besondere Vorteil der Ausführungsform nach Fig. 7 besteht darin, daß die komplette Einrichtung in einfacher Weise als ein Ganzes in den Behälter 1 eingebaut oder aus ihm ausgebaut werden kann. Hinsichtlich Funktion und Prüfablauf gilt auch hier das zu Fig. 1 und 5 Beschriebene.

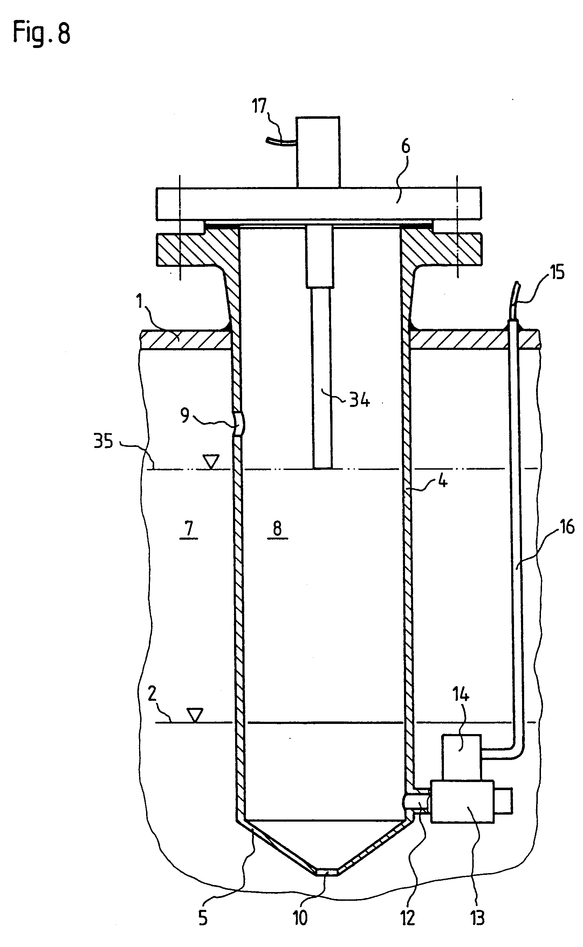

Die Ausführung nach Fig. 8 unterscheidet sich von jener aus Fig. 1 durch den kürzeren Niveausensor 34 und eine entgegengesetzte Förderrichtung der Pumpe 13. Die Aufgabe des Niveausensors 34 besteht darin, ein eventuelles Ansteigen des Flüssigkeitsstandes 2 bis an ein Hochniveau 35 zu signalisieren. Die Druckausgleichsöffnung 9 befindet sich oberhalb des Hochniveaus 35.

Zur Überprüfung der Funktionstüchtigkeit der Einrichtung wird die Pumpe 13 in Betrieb gesetzt und so aus dem Behälter 1 durch den Kanal 12 Flüssigkeit in das Gehäuse 4 gepumpt. Infolgedessen steigt darin vorübergehend der Flüssigkeitsstand 2. Sobald er das Hochniveau 35 erreicht, erzeugt der Niveausensor 34 ein entsprechendes Signal. Die Funktionstüchtigkeit des Niveausensors 34 ist dadurch erwiesen. Im übrigen gilt für die Überprüfung das zu Fig. 1 Beschriebene sinngemäß.

Auch mit Ausführungen nach den Fig. 2 bis 7 ließe sich bei entsprechender Förderrichtung ein Niveausensor 34 für Hoch-Flüssigkeitsstand überprüfen. Mit einer Pumpe 13, 21 mit umschaltbarer Förderrichtung könnte sowohl ein Niveausensor 11 für Niedrig-Flüssigkeitsstand als auch ein solcher 34 für Hoch-Flüssigkeitsstand überprüft werden.

Bei allen sieben Ausführungsbeispielen wird zum Zwecke der Prüfung aus dem Gehäuse 4 Flüssigkeit in den umgebenden Behälter 1 gepumpt oder umgekehrt. In keinem Fall wird dem Gehäuse 4 ein Medium zugeführt oder aber Flüssigkeit in einen Aufnahmeraum außerhalb des Gehäuses 4 oder des Behälters 1 abgeleitet.

### Bezugszeichenliste:

- 1: Behälter
- 2: Flüssigkeitsstand
- 3: Niedrigniveau
- 4: Gehäuse
- 5: Trennwand
- 6: Außenwand
- 7, 8: Innenräume
- 9: Druckausgleichsöffnung
- 10: Durchtrittsöffnung
- 11: Niveausensor
- 12: Kanal
- 13: Pumpe
- 14: Antriebsmotor
- 15: Anschlußleitung
- 16: Schutzrohr
- 17: Signalleitung
- 18: Abflußleitung
- 19: Rückführleitung
- 20: Durchlaßöffnung
- 21: Förderrad
- 22: Wellenlager
- 23: Antriebswelle
- 24: Kanalabschnitt
- 25: Kupplung
- 26: Winkelgetriebe
- 27: Schulter
- 28: Distanzstangen
- 29: Haltefedern
- 30: Aufnahmeöffnung
- 31: Deckel
- 32: Wellenlager
- 33: Getriebe
- 34: Niveausensor
- 35: Hochniveau

## Patentansprüche

1. Einrichtung zur Überwachung des Flüssigkeitsstandes in einem Behälter mit
- einem im Behälter angeordneten Gehäuse, das mindestens zwei in unterschiedlicher Höhe vorgesehene, die Innenräume des Behälters und des Gehäuses miteinander verbindende Öffnungen aufweist, von denen die untere als Durchtrittsöffnung für die im Behälter befindliche Flüssigkeit dient, während die obere Öffnung eine Druckausgleichsöffnung bildet, und
- mindestens einem im Gehäuse angeordneten Niveausensor, **gekennzeichnet durch** einen den Innenraum (8) des Gehäuses (4) mit dem Innenraum (7) des Behälters (1) verbindenden Kanal (12; 10, 24), der mit einer Pumpe (13, 21) zur Änderung des Flüssigkeitsstandes (2) im Gehäuse (4) versehen ist.

2. Einrichtung nach Anspruch 1, **dadurch gekennzeichnet,** daß
- im Gehäuse (4) mindestens ein einen Niedrig-Flüssigkeitsstand (3) überwachender Niveausensor (11) angeordnet ist,
- der Kanal (12; 10, 24) unterhalb dieses Niedrig-Flüssigkeitsstandes (3) in den Innenraum (8) des Gehäuses (4) mündet und
- die Pumpe (13, 21) vom Gehäuse (4) in den Behälter (1) fördert.

3. Einrichtung nach einem oder beiden der Ansprüche 1 und 2, **dadurch gekennzeichnet**, daß im Gehäuse (4) mindestens ein einen Hoch-Flüssigkeitsstand (35) überwachender Niveausensor (34) angeordnet ist und die Pumpe (13, 21) vom Behälter (4) in das Gehäuse (1) fördert.

4. Einrichtung zur Überwachung des Flüssigkeitsstandes nach einem oder mehreren der vorhergehenden Ansprüche, **dadurch gekennzeichnet**, daß die Pumpe (21) innerhalb des Behälters (1) und ihr Antriebsmotor (14) außerhalb des Behälters (1) angeordnet ist und eine Antriebswelle (23) die innenliegende Pumpe (21) mit dem außenliegenden Antriebsmotor (14) verbindet.

5. Einrichtung zur Überwachung des Flüssigkeitsstandes nach Anspruch 4, **dadurch gekennzeichnet,** daß
- das Gehäuse (4) an seinem einen Ende, außerhalb des Behälters (1) eine Außenwand (6) aufweist, an der der Antriebsmotor (14) angeordnet ist,
- an dem anderen Ende des Gehäuses (4) der Kanal (12) und die Pumpe (21) angeordnet sind und
- die Antriebswelle (23) das Gehäuse (4) von der Außenwand (6) zur Pumpe (21) hin durchsetzt.

6. Einrichtung zur Überwachung des Flüssigkeitsstandes nach Anspruch 5, **dadurch gekennzeichnet**, daß die Außenwand (6) des Gehäuses (4) lösbar und die Pumpe (21) herausziehbar im Kanal (12) angeordnet ist.

7. Einrichtung zur Überwachung des Flüssigkeitsstandes nach Anspruch 5, **dadurch gekennzeichnet**, daß
- der Kanal einen ersten Abschnitt (10) kleineren Querschnitts und einen zweiten Abschnitt (24) größeren Querschnitts aufweist,
- der erste Abschnitt (10) mit dem Innenraum (8) des Gehäuses (4) verbunden ist und
- sich im zweiten Abschnitt (24) die Pumpe (21) befindet.

8. Einrichtung zur Überwachung des Flüssigkeitsstandes nach einem oder mehreren der Ansprüche 4 bis 7, **dadurch gekennzeichnet**, daß als Pumpe ein mit der Antriebswelle (23) verbundenes Förderrad (21) vorgesehen ist.

9. Einrichtung zur Überwachung des Flüssigkeitsstandes nach einem oder beiden der Ansprüche 7 und 8, **dadurch gekennzeichnet,** daß die Durchtrittsöffnung (10) den ersten Abschnitt des Kanals bildet.

10. Einrichtung zur Überwachung des Flüssigkeitsstandes nach einem oder mehreren der Ansprüche 7 bis 9, **dadurch gekennzeichnet,** daß
- die Außenwand (6) des Gehäuses (4) lösbar angeordnet ist,
- das Gehäuse (4) zwischen dem Innenraum (8) und der Pumpe (21) eine herausnehmbare Trennwand (5) aufweist und
- Mittel (28, 29) zur Sicherung der Trennwand (5) in ihrer Einbaulage vorgesehen sind.

11. Einrichtung zur Überwachung des Flüssigkeitsstandes nach Anspruch 10, **dadurch gekennzeichnet**, daß als Mittel zur Lagesicherung der Trennwand (5) mindestens eine Distanzstange (28) zwischen der Trennwand (5) und der Außenwand (6) des Gehäuses (4) angeordnet ist.

12. Einrichtung zur Überwachung des Flüssigkeitsstandes nach einem oder mehreren der Ansprüche 4 bis 9, **dadurch gekennzeichnet,** daß
- der Behälter (1) eine Aufnahmeöffnung (30) aufweist,
- das Gehäuse (4) als herausziehbar angeordnetes Rohr ausgebildet ist, das von außen durch die Aufnahmeöffnung (30) in den Innenraum (7) des Behälters (1) hineinragt und an seinem behälterinneren Rohrende die Pumpe (21) aufweist, und
- ein Deckel (31) das Gehäuse (4) und die Aufnahmeöffnung (30) nach außen verschließt.

13. Einrichtung zur Überwachung des Flüssigkeitsstandes nach einem oder mehreren der Ansprüche 4 bis 12, **dadurch gekennzeichnet,** daß
- das Gehäuse (4) als Rohr ausgebildet ist,
- das Gehäuse (4) mit Abstand zu seinem behälterinneren Rohrende quer eine Trennwand (5) aufweist,
- die Durchtrittsöffnung (10) in der Trennwand (5) angeordnet ist,
- die Antriebswelle (23) die Trennwand (5) durchdringt und
- die Pumpe (21) in dem zwischen der Trennwand (5) und dem behälterinneren Rohrende gelegenen Abschnitt des Gehäuses (4) angeordnet ist.

14. Einrichtung zur Überwachung des Flüssigkeitsstandes nach einem oder mehreren der Ansprüche 4 bis 13, **dadurch gekennzeichnet,** daß die Antriebswelle (23) mit einer in Antriebswellen-Längsrichtung trennbaren Kupplung (25) versehen ist.

15. Einrichtung zur Überwachung des Flüssigkeitsstandes nach einem oder mehreren der Ansprüche 1 bis 3, **dadurch gekennzeichnet,** daß die Pumpe (13) und ihr Antriebsmotor (14) eine tauchbare Einheit bilden, die im Behälter (1) angeordnet ist.

16. Einrichtung zur Überwachung des Flüssigkeitsstandes nach einem oder mehreren der vorhergehenden Ansprüche, **dadurch gekennzeichnet,** daß die Durchtrittsöffnung (10) den Kanal für die Pumpe (13, 21) bildet.

17. Einrichtung zur Überwachung des Flüssigkeitsstandes nach einem oder mehreren der Ansprüche 1 bis 3, **dadurch gekennzeichnet,** daß
- als Kanal (12) eine von unterhalb des zu überwachenden Flüssigkeitsstandes (2) im Gehäuse (4) nach außen und von dort wieder in den Behälter (1) führende Leitung (18, 19) vorgesehen ist und
- die Pumpe (13) im außenliegenden Teil der Leitung (18, 19) angeordnet ist.

18. Einrichtung zur Überwachung des Flüssigkeitsstandes nach Anspruch 17, **dadurch gekennzeichnet**, daß
- das Gehäuse (4) an seinem einen Ende außerhalb des Behälters (1) eine lösbare Außenwand (6) aufweist,
- der nach außen und der nach innen führende Teil der Leitung (18, 19) beide die Außenwand (6) durchsetzen und
- das Gehäuse (4) an seinem anderen der Außenwand (6) gegenüberliegenden Ende eine Durchlaßöffnung (20) aufweist, durch die der nach innen führende Teil der Leitung (18, 19) in den Behälter (1) hineinragt.

19. Einrichtung zur Überwachung des Flüssigkeitsstandes nach einem oder mehreren der vorhergehenden Ansprüche, **dadurch gekennzeichnet,** daß der Niveausensor (11, 34) an der lösbaren Außenwand (5) des Gehäuses (4) angeordnet ist.
